# EUROPÄISCHE PATENTSCHRIFT

(11) **EP 1 724 726 B1**
(45) Veröffentlichungstag und Bekanntmachung des Hinweises auf die Patenterteilung: **14.10.2009**
(21) Anmeldenummer: 06008727.7
(22) Anmeldetag: 27.04.2006
(51) Int. Cl.: G06T 7/60, B60Q 1/48, G06T 7/00

(54) **Verfahren und Vorrichtung zur Parkraumvermessung mittels einer Monokamera**
Method and apparatus for measuring a parking space with a single camera
Méthode et dispositif pour la mesure d'un espace de stationnement à l'aide d'une mono-caméra

(30) Priorität: 18.05.2005 DE 102005022882
(43) Veröffentlichungstag der Anmeldung: 22.11.2006
(73) Patentinhaber: Volkswagen Aktiengesellschaft, 38436 Wolfsburg (DE)
(72) Erfinder: Graf, Thorsten, 38518 Gifhorn (DE); Krampe, Andre, 38440 Wolfsburg (DE); Schrader, Klaus-Dieter, 31224 Peine (DE)
(74) Vertreter: Zucker, Volker

(56) Entgegenhaltungen:
- EP-A- 1 094 337
- CERRI P ET AL: "Free Space Detection on Highways using Time Correlation between Stabilized Sub-pixel precision IPM Images" ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18. April 2005 (2005-04-18), Seiten 2223-2228, XP010871774 ISBN: 0-7803-8914-X
- BERTOZZI M ET AL: "GOLD: A PARALLEL REAL-TIME STEREO VISION SYSTEM FOR GENERIC OBSTACLE AND LANE DETECTION" IEEE TRANSACTIONS ON IMAGE PROCESSING, IEEE SERVICE CENTER, PISCATAWAY, NJ, US, Bd. 7, Nr. 1, Januar 1998 (1998-01), Seiten 62-80, XP000727376 ISSN: 1057-7149

## Beschreibung

Die Erfindung betrifft ein Verfahren und eine Vorrichtung zur Parkraumvermessung mittels einer Monokamera.

Eine Vermessung eines Parkraums ist nützlich, um einen Fahrer beim Einparken seines Fahrzeugs zu unterstützen. Die Parkraumvermessung wird in der Regel von einer Vorrichtung oder einem Verfahren ausgeführt, die als Einparkhilfe bezeichneten werden. Aus dem Stand der Technik sind verschiedene Einparkhilfen bekannt.

In DE 197 41 896 C2 sind ein Verfahren und eine Vorrichtung zur grafischen Darstellung der Umgebung eines Fahrzeugs in Abhängigkeit von Betriebskennwerten des Fahrzeugs beschreiben, bei denen eine digitale Kamera dreidimensionale Bilddaten liefert. Die Bilddaten umfassen zusätzlich zu zweidimensionalen Abbildungsdaten Abstandsdaten für die dargestellten Objekte. Die Bilddaten werden in einem Betriebszustand verwendet, um eine Draufsicht der von der Kamera erfassten Umgebung darzustellen. Dieses bietet dem Fahrer zwar eine weitere Orientierungsmöglichkeit erlaubt jedoch nicht die Ermittlung der Abmessungen eines Parkraums.

In DE 102 50 021 A1 sind die bekannte Vorrichtung und das bekannte Verfahren aus DE 197 41 896 weiter entwickelt. In der Draufsichtdarstellung wird ein Parkplatzsymbol eingeblendet, dessen Größe einer für ein Einparkmanöver benötigten Fläche entspricht. Dieses ermöglicht einem Fahrer selbst optisch abzuschätzen, ob das eingeblendete Parkraumsymbol korrekt platziert und frei von Hindernissen ist. Eine Vermessung des Parkraums findet nicht statt.

Auf einem ähnlichen Prinzip basiert ein in EP 1 288 071 A2 beschriebenes Einparkunterstützungssystem. Bei diesem System wird das Fahrzeug in Form eines Symbols in einer geparkten Sollposition sowohl in eine Draufsicht der Umgebung als auch perspektivisch in eine reale Kameraansicht der Umgebung eingeblendet. Auch bei diesem System wird der Parkraum nicht vermessen. Vielmehr dient die Einblendung der Abschätzung, ob der Parkraum eine ausreichende Größe besitzt. Sowohl bei dem bekannten System aus EP 1 288 07 A2 als auch bei dem Verfahren nach DE 102 50 021 A1 wird eine Trajektorie zum Erreichen der eingeblendeten Soll-Parkposition ausgehend von der aktuellen Fahrzeugposition ermittelt und dargestellt.

Aus der EP 1 094 337 A2 ist ein Verfahren zur Parkraumvermessung mittels einer Monokamera bekannt, umfassend die Verfahrensschritte Aufnahmen einer Abbildung mittels der Monokamera, Bewegen der Monokamera entlang eines Fahrwegs, Aufnahmen einer weiteren Abbildung mittels der Monokamera, Auswerten der Abbildung und der weiteren Abbildung mittels einer Auswerteeinheit, wobei der zurückgelegte Fahrweg berücksichtigt wird, Bilden einer Differenzabbildung und Ermitteln von Abmessungen eines Parkraums anhand der Differenzabbildung.

Nachteilig an den bekannten Verfahren und Vorrichtungen ist, dass die in einfachen zweidimensionalen Kamerabilder enthaltenen Informationen, die im Wesentlichen die Sicht eines Fahrzeugführers wiedergeben, nicht ohne weiteres genutzt werden können, um eine Draufsicht zu erzeugen und eine Parkraumvermessung auszuführen, da hierfür die einzelnen abgebildeten Objekte und deren Abstände identifiziert werden müssen. Hierzu sind aufwendige Sensoren zusätzlich zu einer einfachen Kamera notwendig.

Im Stand der Technik ist ein Verfahren bekannt, bei dem dreidimensionale Objekte, die in einer zweidimensionalen Abbildung abgebildet sind, anhand dieser Abbildung in eine andere Projektionsebene, beispielsweise die Fahrbahnebene, projiziert werden. Das Verfahren wird als invers perspektivische Projektion (inverse perspective mapping - IMP) bezeichnet. Eine sehr detaillierte Darstellung der invers perspektivischen Projektion findet sich in der Veröffentlichung "Stereo inverse perspective mapping: theory and applications" von Massimo Bertozzi et al., Image and Vision Computing 16 (1998), Seiten 585-590. In dieser Veröffentlichung wird anhand von Stereokamerabildern aufgezeigt, wie senkrecht zu einer Ebene stehende Objekte ermittelt werden können.

Aus dem Fachartikel D2: CERRI P ET AL: "Free Space Detection on Highways using Time Correlation between Stabilized Sub-pixel precision IPM Images" ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA, IEEE, 18. April 2005, Seiten 2223-2228, XP010871774 ISBN: 0-7803-8914-X ist eine Abstand- und Hindernisdetektionsmethode bekannt, die auf einer invers perspektivischen Projektion basiert. Zwei Abbildungen werden mittels einer Monokamera zu verschiedenen Zeiten und Positionen aufgenommen. Eine invers perspektivische Projektion wird für jede Abbildung ausgeführt. Anhand der Differenzabbildung zwischen diesen Projektionsabbildungen werden anschließend der freie Raum und die Hindernisse detektiert. Als Anwendungsgebiet wird die Erfassung des freien Raumes auf Autobahnen vorgeschlagen.

WO 2004/059408 beschreibt eine Vorrichtung und ein Verfahren zum Unterstützen des Einparkens eines Fahrzeugs, bei dem ein Parkraum mit Abstandsmesssensoren vermessen wird und anschließend grafisch in Form einer Draufsicht dargestellt wird. In der grafischen Darstellung werden Konturen des Parkraums, eine optimale Sollposition, ein erstes Fahrzeug, ein zweites Fahrzeug und eine Solltrajektorie angezeigt. Das erste Fahrzeug gibt die aktuelle Position des Fahrzeugs und das zweite Fahrzeug die Endposition an, in der sich das Fahrzeug befindet, wenn es der Solltrajektorie folgend bewegt wird. Zwar ermöglichen dieses Verfahren und diese Vorrichtung eine objektive Beurteilung der Parkraumsituation, jedoch sind aufwendige Sensoren zum Vermessen mit einer benötigten Auflösung notwendig. Ferner ist es für einen ungeübten Nutzer nicht einfach, den Konturen die realen Objekte, die er in seiner Umgebung sieht, zuzuordnen.

Der Erfindung liegt das technische Problem zugrunde, ein verbessertes Verfahren und eine verbesserte Vorrichtung zum Vermessen von Parkraum zu schaffen, die mit einfachen Sensoren zuverlässig arbeiten.

Das technische Problem wird durch ein Verfahren mit den Merkmalen gemäß dem Patentanspruch 1 und durch eine Vorrichtung mit den Merkmalen gemäß dem Patentanspruch 10 gelöst. Weitere vorteilhafte Ausgestaltungen der Erfindung ergeben sich aus den Unteransprüchen.

Hierfür wird vorgeschlagen, dass als Sensor eine Monokamera, vorzugsweise eine Rückfahrkamera verwendet wird. Es sind folgende Schritte vorgesehen: Aufnehmen einer Abbildung mittels der Monokamera; Bewegen der Monokamera entlang eines Fahrwegs; Aufnehmen einer weiteren Abbildung mittels der Monokamera; Auswerten der Abbildung und der weiteren Abbildung mittels einer Auswerteeinheit, wobei beim Auswerten der Abbildung und der weiteren Abbildung jeweils eine invers perspektivische Projektion (IPM - inverse perspective mapping) ausgeführt wird und entsprechend eine invers perspektivische Projektions-Abbildung und eine weitere invers perspektivische Projektions-Abbildung erzeugt werden, wobei der zurückgelegte Fahrweg berücksichtigt wird; Bilden einer Differenzabbildung zwischen der invers perspektivischen Projektions-Abbildung und der entsprechend des Fahrwegs "verschobenen" weiteren invers perspektivischen Projektions-Abbildung; und Ermitteln von Abmessungen eines Parkraums anhand der Differenzabbildung.

Beim Aufnehmen einer Abbildung mit einer Monokamera werden dreidimensionale Objekte in der Umgebung des Fahrzeugs in eine Bildebene der Kamera abgebildet. Mittels einer invers perspektivischen Projektion erhält man eine invers perspektivische Projektions-Abbildung. Hierbei werden die Objekte in eine andere Ebene abgebildet, die hier als Fahrbahnebene gewählt wird. Nimmt man eine weitere Abbildung der Umgebung von einer veränderten Kameraposition aus auf, nachdem die Kamera entlang eines Fahrwegs bewegt worden ist, und führt für diese eine invers perspektivische Projektion durch, so erhält man eine weitere invers perspektivische Projektions-Abbildung. "Verschiebt" man die invers perspektivische Projektions-Abbildung gegenüber der weiteren invers perspektivischen Projektions-Abbildung entsprechend des Fahrwegs, so befinden sich die Bildpunkte von Objekten, die in der Fahrbahnebene liegen, in den beiden invers perspektivischen Projektions-Abbildungen an der gleichen Stelle. Bildpunkte von Objekten, die jedoch aus der Fahrbahn herausragen, befinden sich in den beiden gegeneinander verschobenen invers perspektivischen Projektions-Abbildungen an unterschiedlichen Orten. Somit lassen sich anhand einer Differenzabbildung Objekte, die einen Parkraum begrenzen, beispielsweise ein Bordstein, Fahrzeuge usw., mittels Mustererkennung als Begrenzungen identifizieren. Die "Verschiebung" kann direkt bei der invers perspektivischen Projektion mit ausgeführt werden oder anschließend durchgeführt werden, indem eine lineare Abbildung (die in der Regel eine Translation und/oder eine Rotation umfasst) ausgeführt wird. Für die genaue mathematische Berechnung der invers perspektivischen Projektion wird auf die oben genannte Veröffentlichung verwiesen, die hier nicht im Einzelnen wiedergegeben wird.

Weiter werden ergänzende Abbildungen mit einer weiteren Monokamera aufgenommen und mit ausgewertet, wobei die Abbildungen der beiden Monokameras miteinander fusioniert werden. Hierbei können beispielsweise Aufnahmen einer weiteren Monokamera, die im vorderen Bereich eines Fahrzeugs angeordnet, ist mit den Abbildungen fusioniert werden, die mit der Monokamera aufgenommen werden, die im hinteren Bereich des Fahrzeugs angebracht ist.

Bei einer bevorzugten Ausführungsform der Erfindung wird der Fahrweg mit Hilfe von Positionserfassungsmitteln erfasst. Die Positionserfassungsmittel erfassen die Bewegung der Monokamera in allen Raumdimensionen. Geht man davon aus, dass die Monokamera fest an einem Fahrzeug montiert ist, so reicht es aus, eine Verschiebung (Δx, Δy) in der Fahrbahnebene und eine Änderung einer Orientierung in Form eines Ausrichtungswinkels (Δϕ) um eine Achse senkrecht zur Fahrbahnebene zu erfassen. Der Fahrweg ist somit nur noch von drei Veränderlichen (Δx, Δy, Δϕ) abhängig. Die Positionserfassungsmittel können als Satellitennavigations-Empfänger (beispielsweise GPS-Empfänger) ausgestaltet sein. Bevorzugt wird aber eine Ausgestaltung, bei der die Position anhand von Messdaten bestimmt wird, die mit Hilfe von Radimpulssensoren, Fahrrichtungssensoren und/oder Lenkwinkelsensoren usw. ermittelt werden.

In Monokameras werden häufig Weitwinkelobjektive eingesetzt. Hiermit aufgenommene Abbildungen weisen Verzerrungen auf. Um diese und andere Abbildungsfehler zu korrigieren, werden bei einer besonders bevorzugten Ausführungsform der Erfindung die Abbildung und die weitere Abbildung beim Auswerten jeweils vor dem Ausführen der invers perspektivischen Projektion mittels einer Korrektureinheit optisch korrigiert, insbesondere entzerrt.

Für eine Auswertung ist es von Vorteil, wenn die Abbildungen das gesamte zur Verfügung stehende Helligkeitsspektrum ausnutzen. Daher umfasst das optische Korrigieren bei einer besonders bevorzugten Ausführungsform das Durchführen einer Helligkeitsnormierung. Hierdurch können auch Helligkeitsänderungen, die zwischen der Aufnahme der Abbildung und der weitern Abbildung stattgefunden haben bestmöglich berücksichtigt werden.

Um die Aussagestabilität zu erhöhen, ist bei einer vorteilhaften Weiterbildung vorgesehen, dass mittels der Monokamera mindestens eine zusätzliche Abbildung aufgenommen und mit ausgewertet wird.

Bei einer besonders benutzerfreundlichen Ausführungsform der Erfindung werden die ermittelten Abmessungen des Parkraums auf einer grafischen Anzeige dargestellt. Bei der grafischen Anzeige kann es sich um eine Multifunktionsanzeige handeln, wie sie heute bereits in vielen Fahrzeugen verwendet wird. Dem Fachmann sind verschiedene Ausgestaltungen solcher Anzeigen bekannt.

Besonders informativ ist eine Darstellung bei einer bevorzugten Ausführungsform, bei der die Abmessungen des Parkraums vor dem Hintergrund der Abbildung oder der weiteren Abbildung perspektivisch korrekt dargestellt werden.

Eine Weiterbildung der Erfindung sieht vor, dass die Abmessungen des Parkraums in einer schematischen Draufsicht einer Umgebung dargestellt werden, die von der Abbildung oder der weiteren Abbildung erfasst ist. Diese Art der Darstellung kann auch zusätzlich zu einer anderen Art der Darstellung erfolgen.

Bei einer besonders vorteilhaften Weiterbildung der Erfindung werden die ermittelten Abmessungen des Parkraums von einer Steuereinheit verwendet, um Einparkhilfen auszugeben und/oder aktiv ein Einparkmanöver zu steuern oder zu unterstützen. Beispielsweise können optische und/oder akustische Lenk- und Fahrhinweise ausgegeben werden. Es kann aber auch direkt in die Fahrzeuglenkung und/oder den Fahrzeugantrieb eingegriffen werden.

Die Merkmale der Fortbildungen der erfindungsgemäßen Vorrichtung weisen dieselben Vorteile wie die entsprechenden Merkmale des erfindungsgemäßen Verfahrens auf.

Die Erfindung wird nachfolgend anhand bevorzugter Ausführungsbeispiele unter Bezugnahme auf eine Zeichnung näher erläutert. Die Figuren zeigen:
- Fig. 1: eine schematische Darstellung einer Anordnung zur Erläuterung des Prinzips der invers perspektivischen Projektion;
- Fig. 2: eine andere schematische Ansicht eines Fahrzeugs zu zwei Zeitpunkten zur Veranschaulichung einer Fahrwegsparametrisierung;
- Fig. 3: ein schematisches Ablaufdiagramm einer Ausführungsform eines Verfahrens zur Parkraumvermessung;
- Fig. 4a und 4b: eine Abbildung und eine weitere Abbildung, die mittels einer Monokamera aufgenommen sind;
- Fig. 5a und 5b: die entzerrten Abbildungen aus Fig. 4a und 4b;
- Fig. 6a und 6b: die invers perspektivischen Projektions-Abbildungen der Abbildungen aus Fig. 5a und 5b;
- Fig. 7: eine Differenzabbildung der invers perspektivischen Projektions-Abbildungen aus Fig. 6a und 6b; und
- Fig. 8: eine Ausführungsform einer Vorrichtung zur Parkraumvermessung.

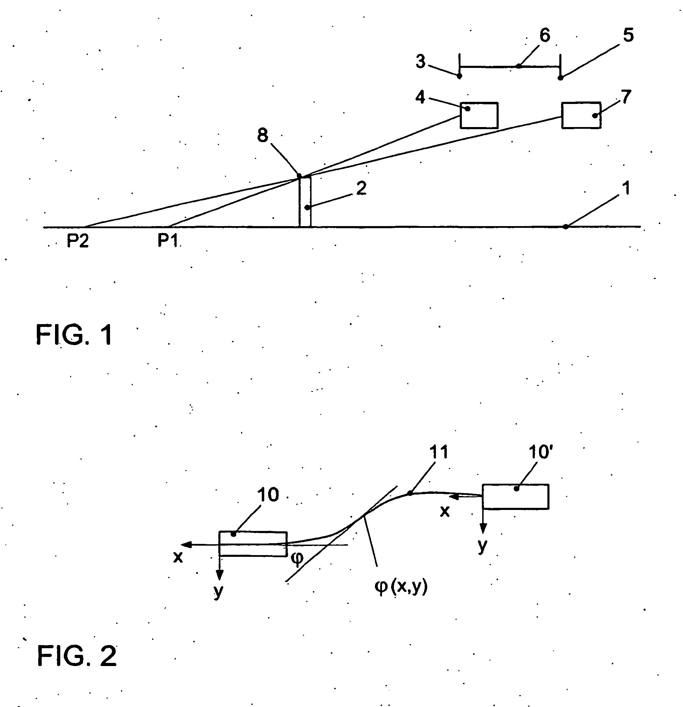

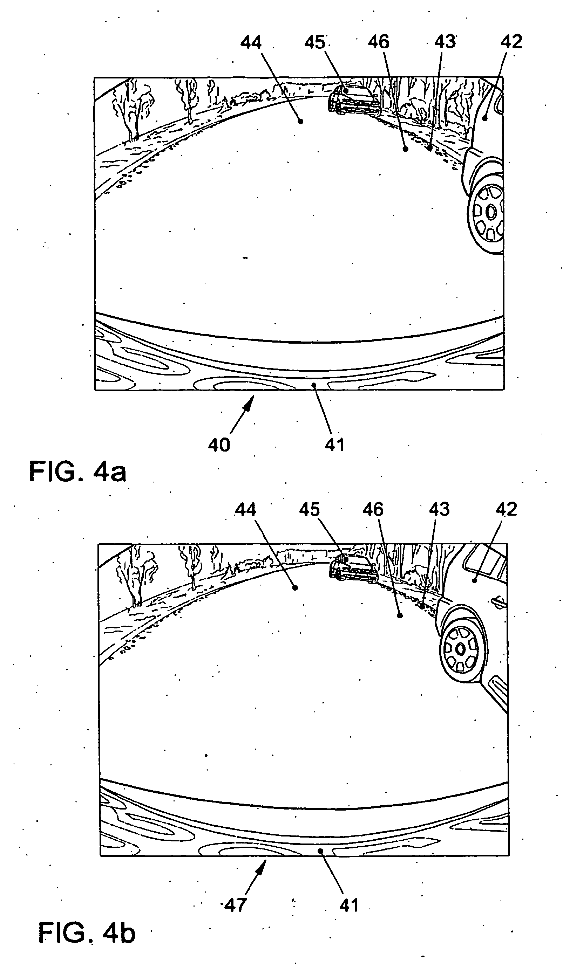

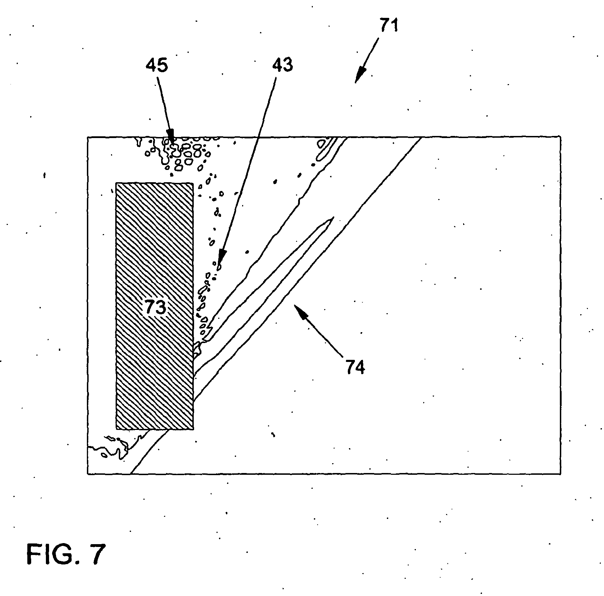

Fig. 1 zeigt ist eine schematische Anordnung zur Erläuterung eines Prinzips einer invers perspektivischen Projektion. Auf einer Fahrbahnebene 1 ist ein erhöhtes Objekt 2 angeordnet, das sich senkrecht zur Fahrbahnebene 11 erstreckt. Zu einem ersten Zeitpunkt befindet sich eine Monokamera an einer ersten Position 3 und nimmt eine Abbildung 4 auf, auf der das erhöhte Objekt 2 abgebildet ist. Die Monokamera wird zu einer anderen Position 5 bewegt und legt hierbei einen Fahrweg 6 zurück, der als eine Wegstrecke ausgebildet ist. An der anderen Position 5 wird eine weitere Abbildung 7 des erhöhten Objekts 2 aufgenommen. Hierbei zeigt sich, dass eine obere hintere Kante 8 des erhöhten Objekts 2 relativ zu Punkten P1 und P2 auf der Fahrbahnebene 1 unterschiedlich abgebildet wird. Während die obere hintere Kante 8 des erhöhten Objekts 2 in der Abbildung 4 an der Stelle des Punktes P1 der Fahrbahnebene 1 abgebildet wird, wird obere hintere Kante 8 des erhöhten Objekts 2 in der weiteren Abbildung 7 an der Position des Punktes P2 auf der Fahrbahnebene 1 abgebildet. Die Position der oberen hinteren Kante 8 relativ zu den Punkten P1 und P2 der Fahrbahnebene 1 unterscheidet sich somit in den Abbildungen 4, 7. Relative Positionen von Punkten der Fahrbahnebene 1, die beim Aufnehmen der Abbildungen 4, 7 nicht durch das erhöhte Objekt 2 verdeckt werden, bleiben jedoch erhalten. Führt man mit den beiden Abbildungen 4, 7 jeweils eine invers perspektivische Projektion unter Berücksichtigung des zurückgelegten Fahrwegs 6 aus, so erhält man eine invers perspektivische Projektions-Abbildung und eine weitere invers perspektivischen Projektions-Abbildung. Zwischen Bildpunkten der erhaltenen invers perspektivischen Projektions-Abbildung und der weiteren invers perspektivischen Projektions-Abbildung, die Objektpunkte der tatsächlichen Fahrbahnebene 1 darstellen, stellt man (abgesehen vom Rauschen und Diskretisierungseffekten) keine Unterschiede fest. Die obere hintere Kante 8 des erhöhten Objekts 2 wird jedoch in der invers perspektivischen Projektions-Abbildung an dem Punkt P1 und in der weiteren invers perspektivischen Projektions-Abbildung an dem Punkt P2 abgebildet. Bei einer Differenzbildung wird man folglich an diesen Punkten P1 und P2 Unterschiede feststellen. Anhand der Unterschiede können erhöhte Objekte erkannt werden. Unter der Berücksichtigung der Kameraparameter (Einbauhöhe, Ausrichtung, Brennweite, usw.) können Abstände vermessen werden, da die Bildpunkte Koordinaten in der Fahrbahnebene 1 entsprechen. Abständen von Bildpunkten sind somit Entfernungen auf der Fahrbahnebene 1 zuordenbar.

Fig. 2 veranschaulicht, wie eine Stellung eines Fahrzeugs 10, 10' entlang eines Fahrwegs 11 parametrisiert werden kann. In einer Ausgangsstellung des Fahrzeugs 10 wird mit einer Monokamera (nicht dargestellt), die starr an dem Fahrzeug verbunden ist, die Abbildung 4 nach Fig. 1 aufgenommen. Die Stellung und Orientierung des Fahrzeugs 10, 10' und somit der Monokamera ist durch kartesische Koordinaten x, y bezüglich eines in der Fahrbahnebene (vgl. Fig. 1) liegenden Koordinatensystems und einen Ausrichtungswinkel Δϕ in dieser Fahrbahnebene, gemessen gegen die x-Achse, an jedem Punkt des Fahrwegs 11 charakterisiert. Für die Auswertung der Abbildung 4 und der weiteren Abbildung 7 nach Fig. 1 sind nur die Stellung und Orientierung der Kamera zum jeweiligen Aufnahmezeitpunkt von Bedeutung. Der genaue Verlauf des Fahrwegs 11 ist unbedeutend. Jedoch wird in der Regel die Stellung und Orientierung ermittelt, indem Veränderungen der einzelnen Koordinaten (Δx, Δy, Δϕ) entlang des Fahrwegs 11 Schrittweise erfasst und addiert werden.

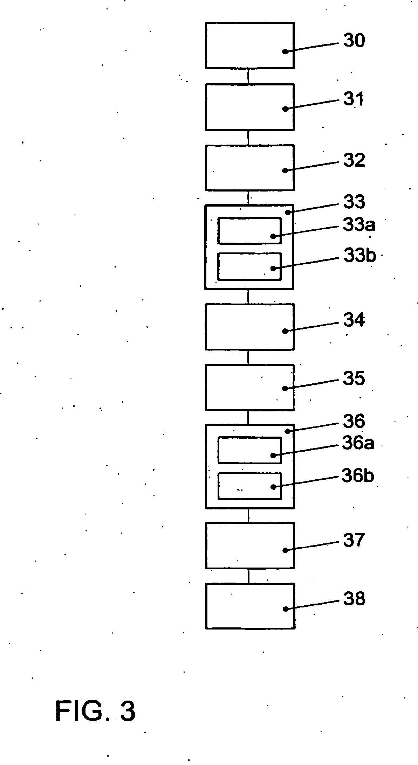

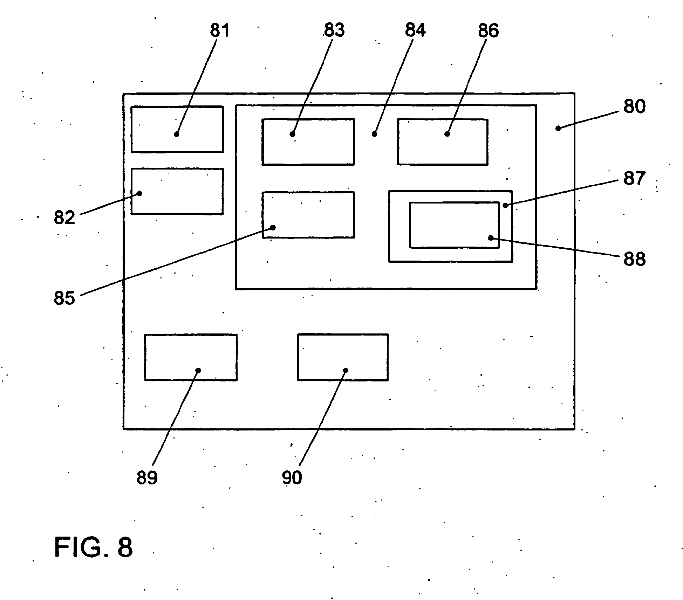

Anhand von Fig. 3 bis 8 wird ein Ablauf einer Ausführungsform eines Verfahrens zur Parkraumvermessung und eine Ausführungsform einer Vorrichtung 80 zum Ausführen des Verfahrens erläutert. Jeder Block des Diagramms der Fig. 3 symbolisiert einen Verfahrensschritt oder zusammengefasste Verfahrensschritte. Fig. 8 zeigt eine schematische Darstellung der Vorrichtung 80. Im Folgenden bezeichnen Bezugszeichen im Bereich von 30 bis 38 Verfahrensschritte gemäß Fig. 3 und Bezugszeichen im Bereich von 80 bis 90 Vorrichtungsmerkmale der Vorrichtung 80 gemäß Fig. 8. Identische Merkmale in den Fig. 4 bis 7 sind mit denselben Bezugszeichen versehen.

Mit einer Monokamera 81, die oberhalb eines rückwärtigen Nummernschilds eines Fahrzeugs angebracht ist, wird eine Abbildung 40 aufgenommen 30. Diese Abbildung 40 ist in Fig. 4a dargestellt. Zu erkennen sind das Nummernschild 41 des Fahrzeugs, oberhalb dessen die Monokamera 81 an dem Fahrzeug befestigt ist, ein vorderes Fahrzeug 42, ein Bordstein 43, eine Fahrbahn 44 und ein hinteres Fahrzeug 45. Das vordere Fahrzeug 42, der Bordstein 43 und das hintere Fahrzeug 45 begrenzen einen Parkraum 46.

Das Fahrzeug und mit ihm die Monokamera 81 werden entlang eines Fahrwegs bewegt und eine Positionsänderung mittels Positionserfassungsmitteln 82 erfasst 31. Anschließend wird eine weitere Abbildung 47 mit der Monokamera 81 aufgenommen 32. Die weitere Abbildung 47 ist in Fig. 4b gezeigt. Zu erkennen sind ebenfalls das Nummernschild 41, das vordere Fahrzeug 42, der Bordstein 43, die Fahrbahn 44, das hintere Fahrzeug 45 und der Parkraum 46. Von dem vorderen Fahrzeug 42 und der Fahrbahn 44 ist aufgrund des zurückgelegten Fahrwegs jeweils ein größerer Abschnitt zu sehen.

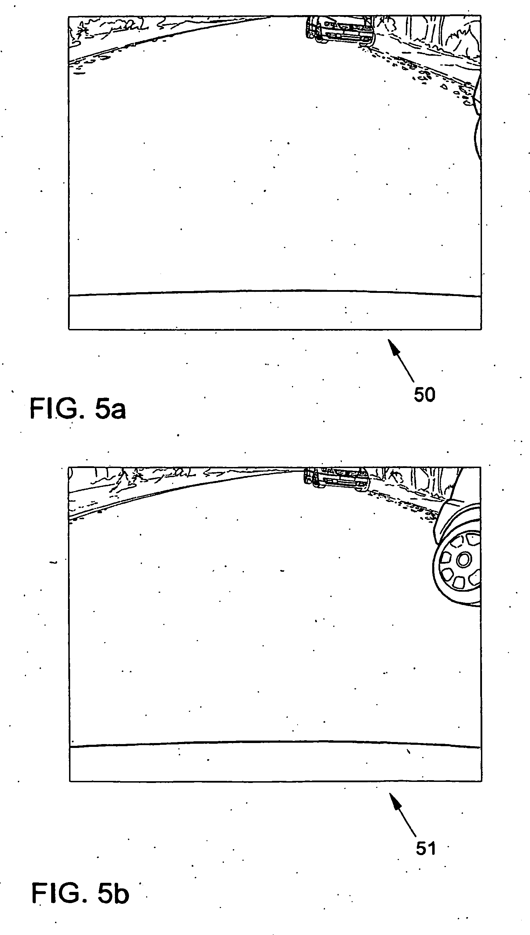

Die Abbildung 40, wiedergegeben in Fig. 4a, und die weitere Abbildung 47, wiedergegeben in Fig. 4b, weisen beide eine so genannte Kissenverzerrung auf. Mittels einer Korrektureinheit 83, die von einer Auswerteeinheit 84 umfasst ist, werden die Abbildungen 40, 47 entzerrt 33a und mittels einer Normierungseinheit 85 eine Helligkeitsnormierung ausgeführt 33b. Das Entzerren und das Normieren repräsentieren ein Korrigieren 33 der beiden Abbildungen 40, 47. Die korrigierte Abbildung 50 ist in Fig. 5a und die korrigiert weitere Abbildung 51 in Fig. 5b gezeigt. (Bei Ausführungsformen, bei denen eine Korrektur der Abbildungen 40, 47 nicht notwendig ist, wird eine weitere Auswertung anhand der unkorrigierten Abbildungen 40, 47 vorgenommen.)

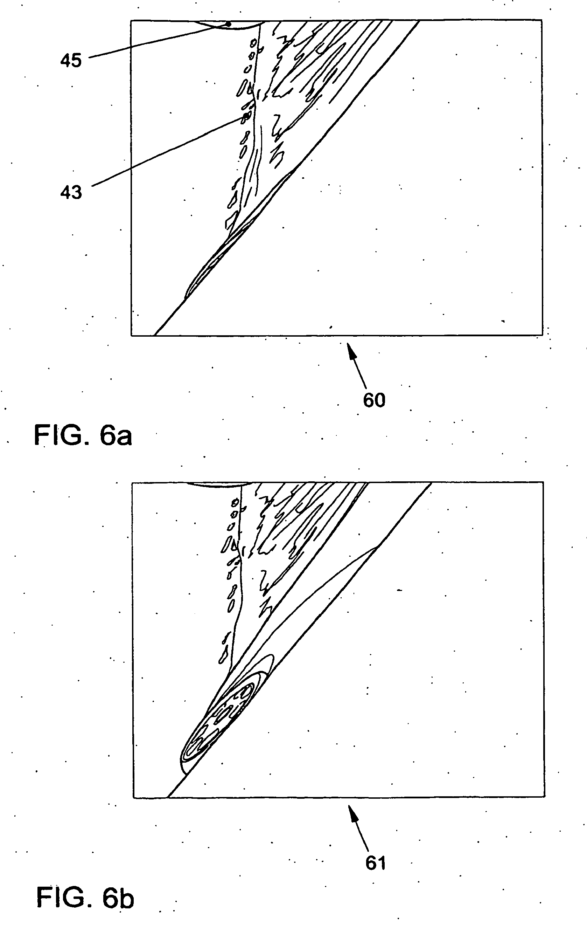

Mit Hilfe der Auswerteeinheit 84 werden anschließend unter Berücksichtigung des zurückgelegten Fahrwegs invers perspektivische Projektionen der korrigierten Abbildung 50 und der korrigierten weiteren Abbildung 51 vorgenommen 34. Aus der korrigierten Abbildung 50 erhält man hierdurch die invers perspektivische Projektions-Abbildung und aus der korrigierten weiteren Abbildung 51 die weitere invers perspektivische Projektions-Abbildung, von denen einander entsprechende Ausschnitte 60, 61 in Fig. 6a und 6b gezeigt sind. Der Fahrweg kann bei der Ausführung der eigentlichen invers perspektivischen Projektion oder anschließend in Form einer Verschiebung berücksichtigt werden. Eine Verschiebung ist allgemein eine lineare Abbildung in der Projektionsebene und kann beispielsweise eine Translation und Rotation umfassen.

Eine Differenzbildungseinheit 86 bildet im Verfahrensschritt 35 eine Differenzabbildung 71 zwischen dem Ausschnitt 60 der korrigierten invers perspektivischen Projektions-Abbildung 50 und dem Ausschnitt 61 der entsprechend des Fahrwegs "verschobenen" korrigierten weiteren invers perspektivischen Projektions-Abbildung 51. Die Differenzabbildung 71 ist in Fig. 7 gezeigt.

Anschließend wird mit Hilfe einer Parkraumermittlungseinheit 87 ein Parkraum vermessen 36. Die Parkraumermittlungseinheit 87 umfasst hierfür eine Mustererkennungseinheit 88. Anhand der Unterschiede in der Differenzabbildung 71 können mit Hilfe einer Mustererkennung Objekte, beispielsweise das hintere Fahrzeug 45 oder der Bordstein 43 erkannt werden 36a , die über die Fahrbahn erhöht sind. Bei der Mustererkennung werden die Objekte nicht identifiziert. Es wird lediglich festgestellt, in welchen Bereichen sich Objekte befinden, die über die Projektionsebene (Fahrbahnebene) erhöht sind. Eine Zuordnung der erkannten erhöhten Objekte in Fig. 7 dient lediglich der Veranschaulichung. Beim eigentlichen Vermessen, wird der Raum zwischen den erkannten erhöhten Objekten vermessen 36b. In Fig. 7 ist ein ermittelter Parkraum mittels eines schraffierten Felds 73 eingezeichnet. Fig. 7 kann ferner eine Fahrwegdifferenz 74 entnommen werden.

Der vermessene Parkraum wird auf einer grafischen Anzeige 89 dem Fahrer angezeigt 37 Die Darstellung kann in Form einer Draufsicht oder als perspektivisch korrekte Überblendung über die, gegebenenfalls korrigierte, Abbildung 40 (50) oder weitere Abbildung 47 (51) erfolgen. Ferner wird dem Fahrer angegeben, dass der vermessene Parkraum groß genug ist, um das Fahrzeug einzuparken.

Mittels einer Steuereinheit 90 wird eine Trajektorie bestimmt und werden Einparkhilfen in Form von optischen oder akustischen Fahranweisungen ausgegeben 38. Eine bevorzugte Ausführungsform sieht vor, dass die Steuereinheit den Einparkvorgang selbstständig steuert. Um unerwünschte Unfälle beispielsweise mit Personen zu vermeiden, die sich in den Parkraum 46 bewegen, kann vorgesehen sein, dass der Fahrer während des automatischen Einparkvorhangs eine Freigabevorrichtung kontinuierlich oder in Intervallen betätigen muss.

Um eine Aussagestabilität zu erhöhen, ist bei einer anderen Ausführungsform vorgesehen, dass zusätzliche Abbildungen mittels der Monokamera aufgenommen und ausgewertet werden. Wieder eine andere Ausführungsform sieht vor, dass zusätzliche Abbildungen mit Hilfe einer weiteren Monokamera aufgenommen und ausgewertet werden.

Eine solche weitere Monokamera kann beispielsweise im Frontbereich des Fahrzeugs angeordnet sein.

## Patentansprüche

1. Verfahren zur Parkraumvermessung mittels Monokameras (81) umfassend die folgenden Schritte:
a. Aufnehmen einer Abbildung (4; 40) mittels einer ersten Monokamera (81);
b. Bewegen der Monokamera (81) entlang eines Fahrwegs (11);
c. Aufnehmen einer weiteren Abbildung (7; 47) mittels der ersten Monokamera (81);
d. Auswerten der Abbildung (4; 40) und der weiteren Abbildung (7; 47) mittels einer Auswerteeinheit (84), wobei der zurückgelegte Fahrweg (11) berücksichtigt wird;
e. Bilden einer Differenzabbildung und
f. Ermitteln von Abmessungen eines Parkraums (46) anhand der Differenzabbildung,
**dadurch gekennzeichnet, dass**
beim Auswerten der Abbildung (4; 40) und der weiteren Abbildung (7; 47) jeweils eine invers perspektivische Projektion ausgeführt wird und entsprechend eine invers perspektivische Projektions-Abbildung (60) und eine weitere invers perspektivische Projektions-Abbildung (61) erzeugt werden, wobei die Differenzabbildung (71) zwischen der Invers perspektivischen Projektions-Abbildung (60) und der entsprechend des Fahrwegs (11) verschobenen weiteren invers perspektivischen Projektions-Abbildung (61) erfolgt, wobei ergänzende Abbildungen mit einer weiteren Monokamera aufgenommen und mit ausgewertet werden, wobei die Abbildungen der beiden Monokameras miteinander fusioniert werden.

2. Verfahren nach Anspruch 1, **dadurch gekennzeichnet, dass** der Fahrweg (11) mit Hilfe von Positionserfassungsmitteln (82) erfasst wird.

3. Verfahren nach Anspruch 1 oder 2, **dadurch gekennzeichnet, dass** die Abbildung (4; 40) und die weitere Abbildung (7; 47) beim Auswerten jeweils vor dem Ausführen der invers perspektivischen Projektion mittels einer Korrektureinheit (83) optisch korrigiert, insbesondere entzerrt, werden.

4. Verfahren nach Anspruch 3, **dadurch gekennzeichnet, dass** das optische Korrigieren das Durchführen einer Helligkeitsnormierung umfasst.

5. Verfahren nach einem der vorangehenden Ansprüche, **dadurch gekennzeichnet, dass** mittels der ersten Monokamera (81) mindestens eine zusätzliche Abbildung aufgenommen und mit ausgewertet wird.

6. Verfahren nach einem der vorangehenden Ansprüche, **dadurch gekennzeichnet, dass** die ermittelten Abmessungen des Parkraums (46) auf einer grafischen Anzeige (89) dargestellt werden.

7. Verfahren nach einem der vorangehenden Ansprüche, **dadurch gekennzeichnet, dass** die Abmessungen des Parkraums (46) vor dem Hintergrund der Abbildung (4; 40) oder der weiteren Abbildung (7; 47) perspektivisch korrekt dargestellt werden.

8. Verfahren nach einem der vorangehenden Ansprüche **dadurch gekennzeichnet, dass** die Abmessungen des Parkraums (46) in einer schematischen Draufsicht auf einer Umgebung dargestellt werden, die von der Abbildung (4; 40) oder der weiteren Abbildung (7; 47) erfasst ist.

9. Verfahren nach einem der vorangehenden Ansprüche, **dadurch gekennzeichnet, dass** die ermittelten Abmessungen des Parkraums (46) von einer Steuereinheit (90) verwendet werden, um Einparkhilfen auszugeben und/oder aktiv ein Einparkmanöver zu steuern oder zu unterstützen.

10. Vorrichtung (80) zur Parkraumvermessung mittels Monokameras (81) umfassend:
g. eine erste Monokamera (81) zum Aufnehmen einer Abbildung (4; 40) und einer weiteren Abbildung (7; 47), wobei die erste Monokamera (81) zwischen dem Aufnehmen der Abbildungen (4; 40) und der weiteren Abbildung (7; 47) entlang eines Fahrwegs (11) bewegbar ist;
h. eine Auswerteeinheit (84) zum Auswerten der Abbildung (4; 40) und der weiteren Abbildung (7; 47), wobei der zurückgelegte Fahrweg (11) berücksichtigbar ist;
i. eine Differenzbildungseinheit (86), mittels derer eine Uifferenzabbildung (71) bildbar ist und
j. eine Parkraumermittiungseinheit (87) zum Ermitteln von Abmessungen eines Parkraums (46) anhand der Differenzabbildung (71),
**dadurch gekennzeichnet, dass**
beim Auswerten der Abbildung (4; 40) und der weiteren Abbildung (7; 47) jeweils eine invers perspektivische Projektion ausführbar ist und entsprechend eine invers perspektivische Projektions-Abbildung (60) und eine weitere invers perspektivische Projektions-Abbildung (61) erzeugbar sind, wobei die Differenzabbildung (71) zwischen der invers perspektivischen Projektions-Abbildung (60) und der entsprechend des Fahrwegs (11) verschobenen weiteren invers perspektivischen Projektions-Abbildung (61) erfolgt, umfassend eine weitere Monokamera zur Aufnahme ergänzender Abbildungen, wobei die Aufnahmen der beiden Monokameras miteinander fusioniert werden.

11. Vorrichtung (80) nach Anspruch 10, **gekennzeichnet durch** Positionserfassungsmittel (82) zum Erfassen des Fahrwegs (11).

12. Vorrichtung (80) nach Anspruch 10 oder 11, **gekennzeichnet durch** eine Korrektureinheit (83), mittels derer die Abbildung (4; 40) und die weitere Abbildung (7; 47) beim Auswerten jeweils vor dem Ausführen der invers perspektivischen Projektion optisch korrigierbar, insbesondere entzerrbar, sind.

13. Vorrichtung (80) nach Anspruch 12, **dadurch gekennzeichnet, dass** die Korrektureinheit (83) eine Normiereinheit (85) umfasst, mittels derer beim Korrigieren eine Helligkeitsnormierung durchführbar ist.

14. Vorrichtung (80) nach einem der Ansprüche 10 bis 13, **dadurch gekennzeichnet, dass** mittels der ersten Monokamera (81) mindestens eine zusätzliche Abbildung aufnehmbar und mittels der Auswerteeinheit (84) auswertbar ist.

15. Vorrichtung (80) nach einem der Ansprüche 10 bis 14, **gekennzeichnet durch** eine grafische Anzeige (89) zum Darstellen der ermittelten Abmessungen des Parkraums (46).

16. Vorrichtung (80) nach einem der Ansprüche 10 bis 15, **dadurch gekennzeichnet, dass** die Abmessungen des Parkraums (46) vor dem Hintergrund der Abbildung (4; 40) oder der weiteren Abbildung (7; 47) perspektivisch korrekt darstellbar sind.

17. Vorrichtung (80) nach einem der Ansprüche 10 bis 16, **dadurch gekennzeichnet, dass** die Abmessungen des Parkraums (46) in einer schematischen Draufsicht einer Umgebung darstellbar sind, die von der Abbildung (4; 40) oder der weiteren Abbildung (7; 47) erfasst ist.

18. Vorrichtung (80) nach einem der Ansprüche 10 bis 17, **gekennzeichnet durch** eine Steuereinheit (90), mittels der anhand der ermittelten Abmessungen des Parkraums (46) Einparkhilfen ausgebbar und/oder aktiv ein Einparkmanöver steuerbar oder unterstützbar sind.

## Claims

1. Method for measuring a parking space by means of mono cameras (81), comprising the following steps:
a. recording of an image (4; 40) by means of a first mono camera (81);
b. movement of the mono camera (81) along a route (11) ;
c. recording of a further image (7; 47) by means of the first mono camera (81);
d. evaluation of the image (4; 40) and of the further image (7; 47) by means of an evaluation unit (84), wherein the route (11) travelled along is taken into account;
e. formation of a differential image and
f. determination of dimensions of a parking space (46) by means of the differential image,
**characterized in that**
when the image (4; 40) and the further image (7; 47) are evaluated, in each case a projection with inverse perspective is implemented, and correspondingly a projection image (60) with inverse perspective and a further projection image (61) with inverse perspective are generated, wherein the differential image (71) is implemented between the projection image (60) with inverse perspective and the further projection image (61) which has inverse perspective and is shifted in accordance with the route (11), wherein supplementary images are recorded with a further mono camera and also evaluated, wherein the images of the two mono cameras are fused to one another.

2. Method according to Claim 1, **characterized in that** the route (11) is also sensed using position-sensing means (82).

3. Method according to Claim 1 or 2, **characterized in that** the image (4; 40) and the further image (7; 47) are visually corrected, in particular equalized, by means of a correction unit (83) during the evaluation, in each case before the projection with inverse perspective is implemented.

4. Method according to Claim 3**, characterized in that** the visual correction comprises the execution of brightness normalization.

5. Method according to one of the preceding claims, **characterized in that** at least one additional image is recorded by means of the first mono camera (81) and also evaluated.

6. Method according to one of the preceding claims, **characterized in that** the dimensions which are determined for the parking space (46) are displayed on a graphic display (89).

7. Method according to one of the preceding claims, **characterized in that** the dimensions of the parking space (46) are displayed with the correct perspective against the background of the image (4; 40) or of the further image (7; 47).

8. Method according to one of the preceding claims, **characterized in that** the dimensions of the parking space (46) are displayed in a schematic plan view of the surroundings which are covered by the image (4; 40) or the further image (7; 47).

9. Method according to one of the preceding claims, **characterized in that** the dimensions which are determined for the parking space (46) are used by a control unit (90) to output parking assistance and/or to actively control or assist a parking manoeuvre.

10. Device (80) for measuring a parking space by means of mono cameras (81), comprising:
g. a first mono camera (81) for recording an image (4; 40) and a further image (7; 47), wherein the first mono camera (81) can be moved between the recording of the images (4; 40) and of the further image (7; 47) along a route (11);
h. an evaluation unit (84) for evaluating the image (4; 40) and the further image (7; 47), wherein the route (11) travelled along can be taken into account;
i. as difference-forming unit (86) by means of which a differential image (71) can be formed, and
j. a parking-space-determining unit (87) for determining the dimensions of a parking space (46) by means of the differential image (71),
**characterized in that**
when the image (4; 40) and the further image (7; 47) are evaluated, in each case a projection with inverse perspective can be implemented, and correspondingly a projection image (60) with inverse perspective and a further projection image (61) with inverse perspective can be generated, wherein the differential image (71) is implemented between the projection image (60) with inverse perspective and the further projection image (61) which has inverse perspective and is shifted in accordance with the route (11), comprising a further mono camera for recording supplementary images, wherein the recordings of the mono cameras are fused to one another.

11. Device (80) according to Claim 10, **characterized by** position-sensing means (82) for sensing the route (11).

12. Device (80) according to Claim 10 or 11, **characterized by** a correction unit (83) by means of which the image (4; 40) and the further image (7; 47) can be visually corrected, in particular equalized, during the evaluation in each case before the projection with inverse perspective is implemented.

13. Device (80) according to Claim 12, **characterized in that** the correction unit (83) comprises a normalizing unit (85) by means of which brightness normalization can be carried out during the correction process.

14. Device (80) according to one of Claims 10 to 13, **characterized in that** at least one additional image can be recorded by means of the first mono camera (81) and evaluated by means of the evaluation unit (84).

15. Device (80) according to one of Claims 10 to 14, **characterized by** a graphic display (89) for displaying the dimensions which are determined for the parking space (46).

16. Device (80) according to one of Claims 10 to 15, **characterized in that** the dimensions of the parking space (46) can be displayed with correct perspective against the background of the image (4; 40) or of the further image (7; 47).

17. Device (80) according to one of Claims 10 to 16, **characterized in that** the dimensions of the parking space (46) can be displayed in a schematic plan view of the surroundings which are covered by the image (4; 40) or the further image (7; 47).

18. Device (80) according to one of Claims 10 to 17, **characterized by** a control unit (90) by means of which parking assistance can be output and/or a parking manoeuvre can be actively controlled or assisted using the dimensions which are determined for the parking space (46).

## Revendications

1. Procédé de mesure de l'espace de stationnement au moyen de mono-caméras (81) comprenant les étapes suivantes :
a. Enregistrement d'une représentation (4 ; 40) au moyen d'une première mono-caméra (81) ;
b. Déplacement de la mono-caméra (81) le long d'un trajet (11) ;
c. Enregistrement d'une représentation supplémentaire (7 ; 47) au moyen de la première mono-caméra (81) ;
d. Interprétation de la représentation (4 ; 40) et de la représentation supplémentaire (7 ; 47) au moyen d'une unité d'interprétation (84), le trajet parcouru (11) étant pris en compte ;
e. Formation d'une représentation différentielle et
f. Détermination des dimensions d'un espace de stationnement (46) au moyen de la représentation différentielle,
**caractérisé en ce que**
lors de l'interprétation de la représentation (4 ; 40) et de la représentation supplémentaire (7 ; 47), une projection en perspective inverse est à chaque fois réalisée et une représentation de projection en perspective inverse (60) ainsi qu'une représentation de projection en perspective inverse supplémentaire (61) sont générées en conséquence, la représentation différentielle (71) étant réalisée entre la représentation de projection en perspective inverse (60) et la représentation de projection en perspective inverse supplémentaire (61) décalée en fonction du trajet parcouru (11), des représentations complémentaires étant enregistrées avec une mono-caméra supplémentaire et étant interprétées conjointement, les représentations des deux mono-caméras étant fusionnées entre elles.

2. Procédé selon la revendication 1, **caractérisé en ce que** le trajet (11) est détecté à l'aide de moyens de détection de la position (82).

3. Procédé selon la revendication 1 ou 2, **caractérisé en ce que** la représentation (4 ; 40) et la représentation supplémentaire (7 ; 47), lors de l'interprétation, sont respectivement soumises à une correction optique, notamment une égalisation, au moyen d'une unité de correction (83) avant d'effectuer la projection en perspective inverse.

4. Procédé selon la revendication 3, **caractérisé en ce que** la correction optique comprend la réalisation d'une normalisation de la luminosité.

5. Procédé selon l'une des revendications précédentes, **caractérisé en ce qu'**au moins une représentation supplémentaire est enregistrée au moyen de la première mono-caméra (81) et interprétée conjointement.

6. Procédé selon l'une des revendications précédentes, **caractérisé en ce que** les dimensions déterminées de l'espace de stationnement (46) sont représentées sur un afficheur graphique (89).

7. Procédé selon l'une des revendications précédentes, **caractérisé en ce que** les dimensions de l'espace de stationnement (46) sont représentées correctement en perspective devant l'arrière-plan de la représentation (4 ; 40) ou de la représentation supplémentaire (7 ; 47).

8. Procédé selon l'une des revendications précédentes, **caractérisé en ce que** les dimensions de l'espace de stationnement (46) sont représentées dans une vue de dessus schématique d'un environnement qui est couvert par la représentation (4 ; 40) ou la représentation supplémentaire (7 ; 47).

9. Procédé selon l'une des revendications précédentes, **caractérisé en ce que** les dimensions déterminées de l'espace de stationnement (46) sont utilisées par une unité de commande (90) pour délivrer des aides au stationnement et/ou pour commander ou assister activement une manoeuvre de stationnement.

10. Dispositif (80) de mesure de l'espace de stationnement au moyen de mono-caméras (81) comprenant :
g. une première mono-caméra (81) pour enregistrer une représentation (4 ; 40) et une représentation supplémentaire (7 ; 47), la première mono-caméra (81) pouvant être déplacée le long d'un trajet (11) entre l'enregistrement des représentations (4 ; 40) et de la représentation supplémentaire (7 ; 47) ;
h. une unité d'interprétation (84) pour interpréter la représentation (4 ; 40) et la représentation supplémentaire (7 ; 47), le trajet parcouru (11) étant pris en compte ;
i. une unité de formation d'une représentation différentielle (86) au moyen de laquelle peut être formée une représentation différentielle (71) et
j. une unité de détermination d'espace de stationnement (87) pour déterminer des dimensions d'un espace de stationnement (46) au moyen de la représentation différentielle (71),
**caractérisé en ce que**
lors de l'interprétation de la représentation (4 ; 40) est de la représentation supplémentaire (7 ; 47), une projection en perspective inverse peut à chaque fois être réalisée et une représentation de projection en perspective inverse (60) ainsi qu'une représentation de projection en perspective inverse supplémentaire (61) peuvent être générées en conséquence, la représentation différentielle (71) étant réalisée entre la représentation de projection en perspective inverse (60) et la représentation de projection en perspective inverse supplémentaire (61) décalée en fonction du trajet parcouru (11), comprenant une mono-caméra supplémentaire pour enregistrer des représentations complémentaires, les enregistrements des deux mono-caméras étant fusionnés entre eux.

11. Dispositif (80) selon la revendication 10, **caractérisé par** des moyens de détection de la position (82) pour détecter le trajet parcouru (11).

12. Dispositif (80) selon la revendication 10 ou 11, **caractérisé par** une unité de correction (83) au moyen de laquelle la représentation (4 ; 40) et la représentation supplémentaire (7 ; 47), lors de l'interprétation, peuvent respectivement être soumises à une correction optique, notamment une égalisation, avant d'effectuer la projection en perspective inverse.

13. Dispositif (80) selon la revendication 12, **caractérisé en ce que** l'unité de correction (83) comprend une unité de normalisation (85) au moyen de laquelle peut être réalisée une normalisation de la luminosité lors de la correction.

14. Dispositif (80) selon l'une des revendications 10 à 13, **caractérisé en ce qu'**au moins une représentation supplémentaire peut être enregistrée au moyen de la première mono-caméra (81) et interprétée au moyen de l'unité d'interprétation (84).

15. Dispositif (80) selon l'une des revendications 10 à 14, **caractérisé par** un afficheur graphique (89) destiné à représenter les dimensions déterminées de l'espace de stationnement (46).

16. Dispositif (80) selon l'une des revendications 10 à 15**, caractérisé en ce que** les dimensions de l'espace de stationnement (46) peuvent être représentées correctement en perspective devant l'arrière-plan de la représentation (4 ; 40) ou de la représentation supplémentaire (7 ; 47).

17. Dispositif (80) selon l'une des revendications 10 à 16, **caractérisé en ce que** les dimensions de l'espace de stationnement (46) peuvent être représentées dans une vue de dessus schématique d'un environnement qui est couvert par la représentation (4 ; 40) ou la représentation supplémentaire (7 ; 47).

18. Dispositif (80) selon l'une des revendications 10 à 17, **caractérisé par** une unité de commande (90) au moyen de laquelle, en se basant sur les dimensions déterminées de l'espace de stationnement (46), des aides au stationnement peuvent être délivrées et/ou une manoeuvre de stationnement peut être commandée ou assistée activement.
